# DEMANDE DE BREVET EUROPEEN

(11) **EP 0 994 492 A1**
(43) Date de publication de la demande: **19.04.2000**
(21) Numéro de dépôt: 99402450.3
(22) Date de dépôt: 07.10.1999
(51) Int. Cl.: H01C 7/112, H01C 7/12, H02G 15/068, H02G 15/184

(54) **Materiau adaptatif a composition ternaire utilisable dans des cables electriques**

(30) Priorité: 12.10.1998 FR 9812734
(71) Demandeur: ALCATEL, 75008 Paris (FR)
(72) Inventeur: Decaumont, Anne, 91220 Bretigny sur orge (FR); Galaj, Stanislas, 94110 Arceuil (FR); Rieux, Nadine, 92160 Antony (FR)
(74) Mandataire: Buffiere, Michelle

(57) **Abrégé**

L'invention concerne un matériau adaptatif ayant une composition ternaire. Il peut avantageusement être utilisé dans des câbles électriques et leurs terminaisons dans lesquels il permet d'améliorer les caractéristiques d'écoulement des charges et les réactions aux champs électriques transitoires. Ce matériau composite à résistance électrique non linéaire comportant une matrice polymère et un ensemble de varistances comprenant de l'oxyde de zinc comporte de plus un agent mouillant.

## Description

L'invention concerne un matériau adaptatif ayant une composition ternaire. Il peut avantageusement être utilisé dans des câbles électriques et leurs terminaisons dans lesquels il permet d'améliorer les caractéristiques d'écoulement des charges et les réactions aux champs électriques transitoires.

La solution connue dans l'art antérieur, utilisée par exemple dans la demande de brevet W097/26693, était d'introduire des particules ayant un comportement électrique non linéaire, comme de l'oxyde de zinc dopé, dans le matériau isolant pour y induire une meilleure distribution du champ électrique. Cette solution a cependant le défaut de posséder des caractéristiques électriques qui sont peu reproductibles. On ne peut ainsi pas obtenir un comportement constant dans les composites formés d'une telle matrice et de ces particules. Par exemple, le comportement élastique de certaines matrices peut induire des cavités autour des particules et les caractéristiques électriques ne sont alors plus homogènes, ce qui induit des phénomènes locaux indésirables. Afin de résoudre ces problèmes les solutions préconisées consistent à modifier les proportions et les quantités de particules afin d'optimiser les caractéristiques électriques de tels matériaux. On n'atteint cependant pas la reproductibilité désirée.

L'invention permet de remédier à ces problèmes en ajoutant au mélange connu un nouveau composant qui se trouve au voisinage des particules et qui est capable d'homogénéiser le champ électrique localement dans le composite.

L'invention comporte trois composants.

Le premier composant est une matrice habituellement utilisée dans des applications comme les jonctions et les terminaisons de câble.

Le deuxième composant est un ensemble de particules ayant un comportement électrique non linéaire. Ces particules sont dispersées de manière homogène dans la matrice. Cet élément se comporte intrinsèquement de manière non linéaire au contact d'un champs électrique et peut réduire la tension électrique dans la matrice isolante. Il possède de plus une propriété isolante en l'absence de tension électrique. De l'oxyde de zinc dopé peut être utilisé pour ce composant.

Le dernier composant permet de faire le lien entre les deux premiers composants. Il est choisi parmi les tensioactifs. Son rôle est de remplir au mieux l'interface entre la matrice et les particules et d'homogénéiser le champ électrique local. Ce composant peut, par exemple, être du PEO (polyéthylène oxyde) ou du PPO (polypropylène oxyde). Ces éléments peuvent avantageusement être utilisés sous une forme dopée par l'ion monovalent Li+. Des polymères conducteurs électroniques comme la polyaniline ou le polypyrrole sont aussi envisageables. Ces exemples ne sont pas limitatifs et l'homme de l'art peut aisément utiliser d'autres composés possédant les mêmes propriétés

Dans le processus de fabrication, on malaxe les trois ingrédients, qui se trouvent sous la forme de poudre. On peut ajouter un agent dopant comme des sels organiques de lithium. On utilise habituellement des agents actifs pour disperser la poudre sur la matrice. Dans le cadre de l'invention, on peut utiliser avantageusement des produits spécifiques qui ont de plus des propriétés de conductivité, ce qui évite un gradient électrique trop important à l'interface entre la matrice et les particules. De tels produits sont à la fois des agents tensioactifs et conducteurs. Les polymères conducteurs peuvent posséder certains groupes qui ont des affinités avec la matrice et les oxydes de zinc. Par exemple, dans le cas de la polyaniline sulfonatée, il est possible de la transformer en une interface adéquate en ajustant la masse moléculaire et la viscosité de ces produits. Il faut éviter que l'agent mouillant soit trop liquide. S'il est trop liquide, il n'y a pas une bonne dispersion et les performances redeviennent aléatoires, ce qui empêche la reproductibilité. Il faut donc une viscosité proche de celle de la matrice. Si on note la viscosité en échelle logarithmique, la viscosité de l'agent mouillant doit être environ une décade inférieure à celle de la matrice.

L'invention permet d'améliorer les performances des matériaux, ainsi que la reproductibilité des caractéristiques électriques et permet enfin d'augmenter le nombre de matrices utilisées et d'obtenir une faible dispersion de la tension de seuil. La concentration et la taille des charges varient en fonction de l'application, ce qui donne la possibilité d'ajuster la tension de seuil. On peut ainsi avantageusement utiliser ce matériau dans des applications dans lesquelles l'énergie est faible. De plus, une dispersion réduite permet de réduire le nombre de particules nécessaires.

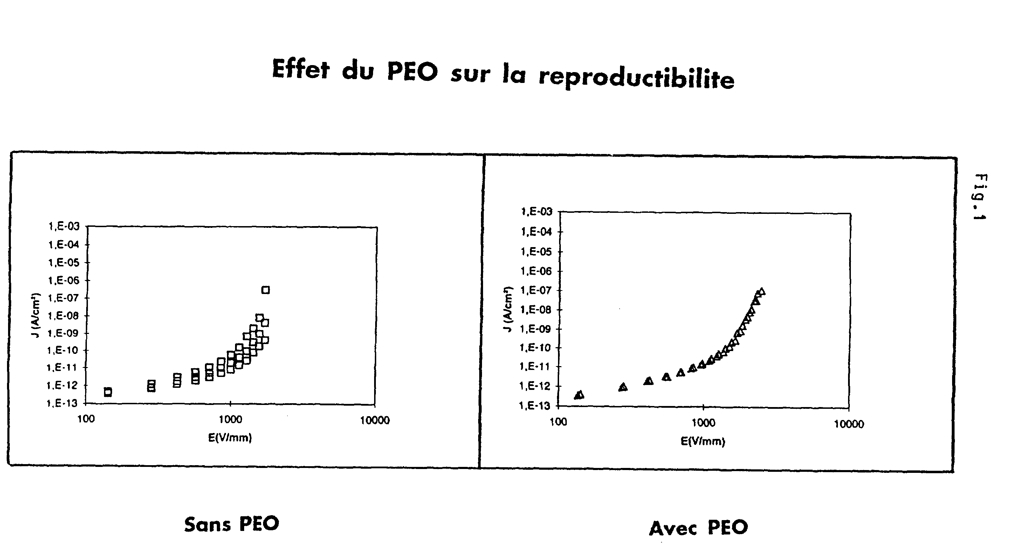

La figure 1 montre la bonne reproductibilité des caractéristiques électriques (tension et intensité) du composite.

De manière préférentielle mais non obligatoire, le tensioactif approprié au composite est le PEO (PolyEthylène Oxyde). Sa composition est une répétition d'unités -(CH2-CH2-O)-. Sa densité est de 1,2 gcm3. Pour une masse moléculaire de 100 000, sa température de fusion est de 75 degrés Celsius. Le PEO est à l'état liquide lors de la réalisation du mélange.

Le PEO s'insère naturellement à l'interface matrice-charge car il a une affinité particulière pour chacun de ces éléments. D'une part, la partie CH2-CH2 se lie aux chaînes carbonées du polymère par des liaisons de type Van der Waals et de son coté l'oxygène crée des liaisons dipolaires avec les cations de zinc ou d'additifs (Co2+, Co3+, Mn3+...) à la surface de l'oxyde de zinc.

On peut réaliser quatre mélanges avec différentes doses de PEO : 0, 1, 2, 10. Une dose de PEO correspond à l'équivalent d'une couche de 5 nanomètres autour d'un grain d'oxyde de zinc. Le taux de charge est de 31% et la granulométrie est 100 - 250 µm.

## Revendications

1. Matériau composite à résistance électrique non linéaire comportant une matrice polymère et un ensemble de varistances comprenant de l'oxyde de zinc caractérisé en ce qu'il comporte de plus un agent mouillant.

2. Matériau composite à résistance électrique non linéaire selon la revendication principale caractérisé en ce que l'agent mouillant est un polymère conducteur ionique.

3. Matériau composite à résistance électrique non linéaire selon l'une quelconque des revendications précédentes caractérisé en ce que l'agent mouillant est dopé partiellement par du lithium.

4. Matériau composite à résistance électrique non linéaire selon l'une quelconque des revendications précédentes caractérisé en ce que l'agent mouillant est de l'oxyde de polypropylène dopé par du lithium.
